# EUROPEAN PATENT APPLICATION

(11) **EP 3 594 388 A1**
(43) Date of publication of application: **15.01.2020**
(21) Application number: 19183547.9
(22) Date of filing: 01.07.2019
(51) Int. Cl.: D03J 1/00

(54) **WOVEN-FABRIC INSPECTION APPARATUS FOR LOOM**

(30) Priority: 12.07.2018 JP 2018131985
(71) Applicant: Kabushiki Kaisha Toyota Jidoshokki, Kariya-shi, Aichi 448-8671 (JP)
(72) Inventor: TSUJI, Ryohei, Kariya-shi Aichi 448-8671 (JP); SUZUKI, Akihiro, Kariya-shi Aichi 448-8671 (JP); MATSUI, Tadasumi, Kariya-shi Aichi 448-8671 (JP)
(74) Representative: TBK

(57) **Abstract**

A woven-fabric inspection apparatus (17) for a loom (10) includes a camera device (18) having a camera main body (19) photographing a woven fabric (W), and is configured to inspect the woven fabric (W) through image analysis of a photographed image. The camera device (18) is placeable on a surface of the woven fabric (W) and includes a support frame (20) supporting the camera main body (19), an illumination light (25) adjusting illuminance of a photographing area (E) of the camera main body (19), and a string body (35) detachably connecting the support frame (20) and a structure body (14) of the loom (10). The structure body (14) extends in a weaving width direction of the woven fabric (W).

## Description

### BACKGROUND ART

The present disclosure relates to a woven-fabric inspection apparatus for a loom.

As an example of a known art of a woven-fabric inspection apparatus for a loom, Japanese Patent Application Publication No. 2000-290861 discloses a woven-fabric inspection apparatus for a loom. In the woven-fabric inspection apparatus disclosed in the above Publication, a guide rail is fixed to a first leg and a second leg so that the guide rail is disposed above a woven fabric, in parallel with, and in a width direction of the woven fabric. A camera main body is retained on a carriage that is movably provided on the guide rail. The camera main body magnifies and photographs the woven fabric. Then, an image photographed with the camera main body is displayed on a monitor screen for a visual inspection to detect a failure. To determine whether the camera main body appropriately photographs the woven fabric, the image displayed on the monitor screen is checked. A handle provided to the carriage is used to move the camera main body.

However, the woven-fabric inspection apparatus according to the above Publication, which is attachable to and detachable from the loom, has a low workability of attachment and detachment because the apparatus is fastened to the loom by bolts. In addition, the apparatus requires large-scale members such as a guild rail and a carriage, which increases the fabrication cost.

The present disclosure has been made in view of the above circumstances and is directed to providing a woven-fabric inspection apparatus for a loom, which allows easy attachment to and detachment from the loom and reduction in the fabrication costs.

### SUMMARY

In accordance with an aspect of the present disclosure, there is provided a woven-fabric inspection apparatus for a loom. The woven-fabric inspection apparatus for the loom includes a camera device having a camera main body photographing a woven fabric, and is configured to inspect the woven fabric through image analysis of a photographed image. The camera device is placeable on a surface of the woven fabric and includes a support frame that supports the camera main body, an illumination light that adjusts illuminance of a photographing area of the camera main body, and a string body that detachably connects the support frame and a structure body of the loom. The structure body extends in a weaving width direction of the woven fabric.

Other aspects and advantages of the disclosure will become apparent from the following description, taken in conjunction with the accompanying drawings, illustrating by way of example the principle of the disclosure.

### BRIEF DESCRIPTION OF THE DRAWINGS

The disclosure, together with objects and advantages thereof, may best be understood with reference to the following description of the embodiments together with the accompanying drawings in which:
FIG. 1 is a schematic perspective view showing an air jet loom according to an embodiment of the present disclosure;
FIG. 2 is a schematic view showing a woven-fabric inspection apparatus for the air jet loom according to the embodiment;
FIG. 3 is a side view showing the woven-fabric inspection apparatus for the air jet loom in use according to the embodiment;
FIG. 4A is a plan view showing a camera device oriented horizontally to a direction of weft according to the embodiment; and
FIG. 4B is a plan view showing the camera device slanted, i.e. not oriented horizontally, to the direction of the weft according to the embodiment.

### DETAILED DESCRIPTION OF THE EMBODIMENTS

A woven-fabric inspection apparatus for a loom according to an embodiment of the present disclosure will be described with reference to the accompanying drawings. First, the loom according to the embodiment of the present disclosure will be described. The loom according to the embodiment is an air jet loom. The woven-fabric inspection apparatus for the loom according to the embodiment is for inspecting for presence or absence of a stop mark in a woven fabric.

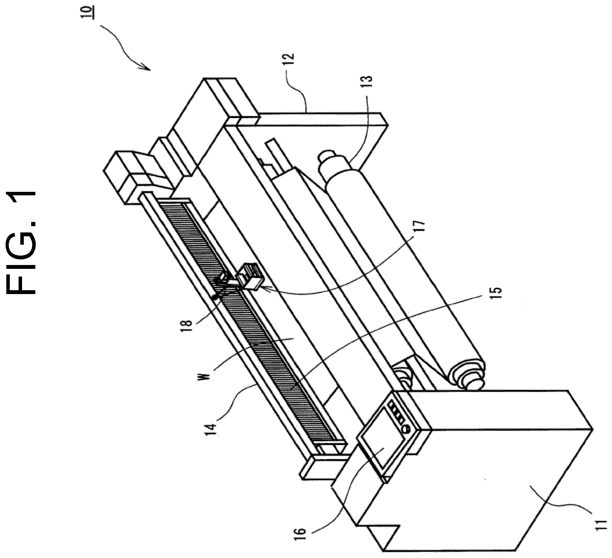

As shown in FIG. 1, an air jet loom 10 includes a pair of left and right side frames 11 and 12. The pair of the left and right side frames 11 and 12 is connected via a plurality of cross rails (not shown). The air jet loom 10 includes a warp beam (not shown) on which the warp is wound and a cloth roll 13 on which a woven fabric W is to be wound. The warp beam constitutes a part of a let-off apparatus for letting off the warp, and the cloth roll 13 constitutes a part of a take-up apparatus for taking up the woven fabric W.

Atop rail 14 is provided at an upper portion of the air jet loom 10. The top rail 14 corresponds to a structure body of the loom extending in the weaving width direction of the woven fabric W. Beneath the top rail 14, a reed 15 is provided for beating a thread of the weft that is inserted into the shed between raised and lowered threads of the warp. On the left side frame 11 disposed at the left end of the air jet loom 10, a function panel 16 is provided for checking an operation status of the air jet loom 10 and for operating the air jet loom 10. FIG. 1 omits showing the let-off apparatus including the warp beam, a weft insertion apparatus including a weft insertion nozzle, and a shedding apparatus including a heddle frame.

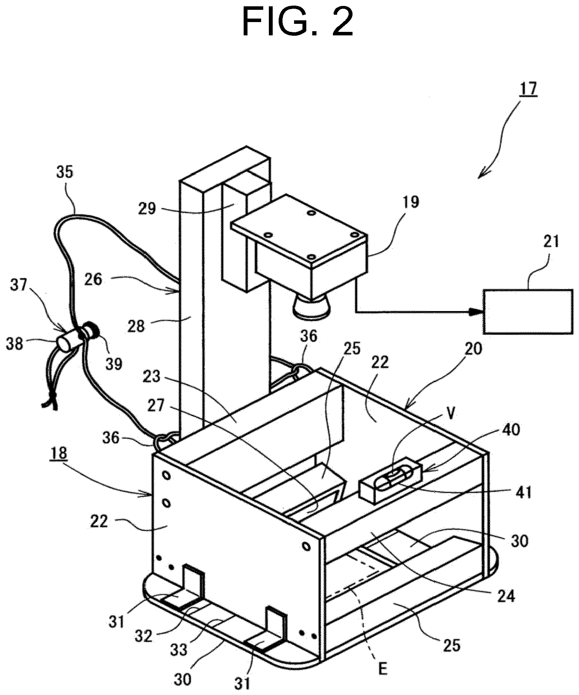

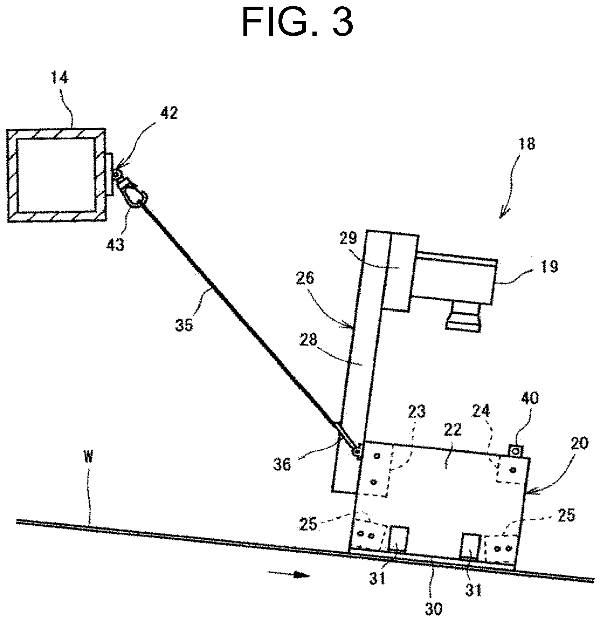

As shown in FIG. 2, a woven-fabric inspection apparatus 17 according to the present embodiment includes a transportable camera device 18 provided independently from the air jet loom 10. To use the woven-fabric inspection apparatus 17, the camera device 18 is placed on a surface of the woven fabric W in front of the reed 15 as shown in FIGs. 1 and 3. The camera device 18 placeable on the surface of the woven fabric W includes a camera main body 19 capable of photographing the woven fabric W and a support frame 20 supporting the camera main body 19.

The camera main body 19 is a known camera capable of photographing the woven fabric W, such as a charge-coupled device (CCD) camera having a CCD image sensor. The camera main body 19 is connected to an image analyzing device 21 that is provided separately from the camera device 18. Therefore, an image photographed by the camera main body 19 is output to the image analyzing device 21 from the camera main body 19, and then the photographed image output from the image analyzing device 21 is analyzed so as to inspect for the stop mark. The image analyzing device 21 may be connected to a display monitor (not shown) to display a result of the image analysis, or connected to the function panel 16 of the air jet loom 10.

The support frame 20 includes a pair of side wall plates 22, two beams 23 and 24 connecting the pair of side wall plates 22, a pair of illumination lights 25 provided below the two beams 23 and 24, and a post 26 fixed to the beam 23, i.e. one of the two beams, and provided with the camera main body 19. The pair of side wall plates 22 is rectangular metal plates disposed in parallel with each other.

As shown in FIG. 2, the beam 23, i.e. the one of the two beams 23 and 24, is attached horizontally across to portions around upper corners of the side wall plates 22 near the post 26. The beam 24, i.e. the other of the two beams, is horizontally attached across to portions around upper corners of the side wall plates 22 away from the post 26. The beam 23, i.e. the one of the two beams, is located at a side nearer to the reed 15 while the beam 24, i.e. the other of the two beams, is located at a side nearer to the woven fabric take-up.

The illumination lights 25 are provided below the beams 23 and 24, respectively. The longitudinal direction of the illumination lights 25 is in the horizontal direction, and opposite ends of the illumination lights 25 in the longitudinal direction are fixed to the side wall plates 22 respectively. The pair of illumination lights 25 is in parallel with each other, and the sides thereof facing each other are illuminating devices 27. FIG. 2 shows one of the illuminating devices 27 of the illumination lights 25 at the side of the beam 23, i.e. the one of the two beams, but does not show the other of the illuminating devices 27 of the illumination lights 25 at the side of the beam 24, i.e. the other of the two beams. The illumination lights 25 illuminate a photographing area E of the camera main body 19, and the illuminance in the photographing area E is adjustable. The optical axis of each of the illuminating devices 27 is disposed in a slightly slanting downward direction. The illumination lights 25 serve as beams with opposite ends of the two illumination lights 25 fixed to the side wall plates 22.

The post 26 includes a prism-shaped main body 28 and a connecting portion 29 to which the camera main body 19 is attached. The base of the main body 28 is fixed to an outer surface of the beam 23, i.e. the one of the two beams, and a top end of the main body 28 is disposed above the base. The connecting portion 29 is provided to an inner surface of the top end portion of the main body 28 and supports the camera main body 19 such that a lens (not shown) of the camera main body 19 faces downward. The photographing area E of the camera main body 19 is provided in an area surrounded by the pair of the side wall plates 22 of the support frame 20 and the pair of the illumination lights 25.

At a bottom of the support frame 20, a pair of plate members 30 is provided. The plate member 30 is made of a transparent acrylic plate. The plate members 30 are fixed to the side wall plates 22 by using fixing brackets 31. The plate members 30 may be in contact with the woven fabric W. The photographing area E is disposed between the pair of the plate members 30.

The plate member 30 according to the present embodiment includes positioning marks 32 and 33 for positioning a weaving-resuming weft thread in the woven fabric W to inspect for the stop mark. The weaving-resuming weft thread is a thread of the weft of the woven fabric W inserted between threads of warp when weaving is resumed after the stop in operation of the air jet loom 10. When weaving is resumed after the stop in operation of the air jet loom 10 by some cause, the stop mark tends to be formed. The stop mark has three types: a heavy-filling bar having a narrower pitch between the threads of the weft than the normal pitch, a light-filling bar having a broader pitch between the threads of the weft than the normal pitch, and a wavy set mark formed by a dislocated thread of the weft in a thickness direction.

A positioning mark 32 is a mark formed across the plate members 30 for positioning the weaving-resuming weft thread to inspect for the heavy-filling bar and the light-filling bar. An extending direction of the positioning mark 32 is a direction orthogonal to a plate surface of the side wall plate 22, that is, a direction in parallel with a longitudinal direction of the beams 23 and 24. Therefore, to inspect for the stop mark, the positioning mark 32 is allowed to extend in the direction of the weft in the woven fabric W. Positioning the weaving-resuming weft thread with the positioning mark 32 enables an inspection for the heavy-filling bar and the light-filling bar.

A positioning mark 33 is formed across the plate members 30 for positioning the weaving-resuming weft thread to inspect for the wavy set mark. Like the positioning mark 32, an extending direction of the positioning mark 33 is a direction orthogonal to the plate surface of the side wall plate 22, that is, a direction in parallel with the longitudinal direction of the beams 23 and 24. Therefore, to inspect for the stop mark, the positioning mark 33 is allowed to extend in the direction of the weft in the woven fabric W. Positioning the weaving-resuming weft thread with the positioning mark 33 enables an inspection for the wavy set mark.

The camera device 18 according to the present embodiment includes a string 35, corresponding to a string body, detachably connecting the camera device 18 to the top rail 14. The string 35 is a commercially available, relatively inexpensive resin string. Both ends of the string 35 are tied each other, having no end. As shown in FIG. 1, ring-shaped members 36 are provided on an outer surface at locations near the opposite ends of the beam 23, i.e. the one of the two beams, of the camera device 18. The string 35 passes through these ring-shaped members 36.

The string 35 passes through a length adjusting device 37 that adjusts a length of the string 35. The length adjusting device 37 is a known device including an outer cylindrical member 38, an inner cylindrical member 39, and an urging member (not shown). The outer cylindrical member 38 and the inner cylindrical member 39 have holes (not shown) through which the string 35 passes. The urging member is accommodated in the length adjusting device 37 and placed between the outer cylindrical member 38 and the inner cylindrical member 39.

The inner cylindrical member 39 is urged by the urging member in a direction to be ejected from the outer cylindrical member 38. As a result, a hole of the outer cylindrical member 38 and a hole of the inner cylindrical member 39 are misaligned with each other and thus a movement of the string 35 is restricted relative to the outer cylindrical member 38 and the inner cylindrical member 39. In order to adjust the length of the string 35, the inner cylindrical member 39 is pushed into the outer cylindrical member 38 to align the holes with each other, which enables to move the string 35 relative to the outer cylindrical member 38 and the inner cylindrical member 39.

According to the present embodiment as shown in FIG. 3, a hooking portion 42, corresponding to an engagement portion, is attached to engage the string 35 to a front surface of the top rail 14. The hooking portion 42 includes a carabiner 43. By engaging the string 35 with the carabiner 43, the camera device 18 is connected to the top rail 14 via the string 35.

The camera device 18 includes a level gauge 40 for positioning an orientation of the camera device 18 in the direction of the weft. The level gauge 40 is a bubble-type level gauge with liquid and a bubble V enclosed in an enclosed space 41 formed inside the level gauge 40. The level gauge 40 is fixed to a top surface the beam 24. The bubble V moves in a direction in parallel with a longitudinal direction of the beam 24, that is, the bubble V in the level gauge 40 moves in the longitudinal direction of the beam 24.

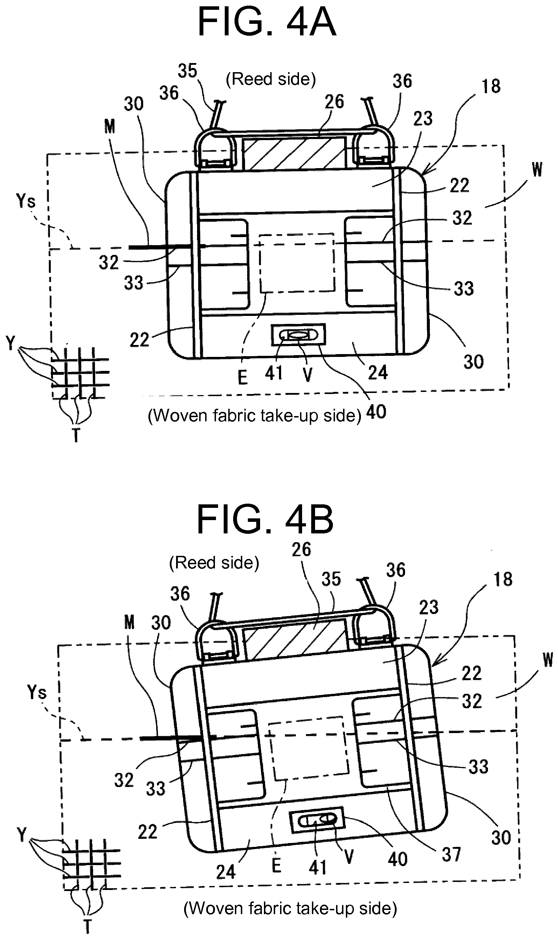

As shown in FIG. 4A, when the bubble V in the level gauge 40 is placed in a pre-determined range, the camera device 18 is oriented horizontally to the direction of weft Y. As shown in FIG. 4B, when the camera device 18 is not oriented horizontally to the direction of the weft Y, the bubble V in the level gauge 40 is placed out of the pre-determined range. In other word, when the bubble V is placed out of the pre-determined range, the camera device 18 is not oriented horizontally to the direction of the weft Y.

Now, the steps of inspecting the woven fabric W using the woven-fabric inspection apparatus 17 for the air jet loom 10 according to the embodiment of the present disclosure will be described. According to the embodiment, the stop mark is inspected by using the woven fabric W woven in a trial run. More specifically, the woven fabric W is inspected for the stop mark in a state after the air jet loom 10 under the trial run being stopped, resumed, and then stopped again.

First, an operator searches for a weaving-resuming weft thread Ys that is a thread of the weft Y of the woven fabric W inserted between threads of warp T when weaving is resumed after the stop in operation of the air jet loom 10. Then, the operator, as shown in FIG. 4A, colors a part of the weaving-resuming weft thread Ys with a tool such as a pen to form a colored portion M such that a position of the weaving-resuming weft thread Ys is identified at sight.

Then, the operator places the camera device 18 on the woven fabric W such that the plate member 30 comes in contact with the woven fabric W and engages the string 35 in the carabiner 43. The operator then controls the length adjusting device 37 to adjust the length of the string 35 appropriately such that the positioning mark 32 approaches the colored portion M. Adjusting the length of the string 35 allows changing a distance between the top rail 14 and the camera device 18. Once the length of the string 35 is adjusted, re-adjustment of the length of the string 35 is not required unless the position of the weaving-resuming weft thread Ys in the woven fabric W is changed.

Then, the operator changes the orientation of the camera device 18 such that the camera device 18 is in parallel with the direction of the weft Y. For example, in a case of the inspection for the heavy-filling bar and the light-filling bar, the operator changes the orientation of the camera device 18 such that the weaving-resuming weft thread Ys aligns with the positioning mark 32 as shown in FIG. 4A, from a state where the weaving-resuming weft thread Ys does not align with the positioning mark 32 as shown in FIG. 4B. In a case of the inspection for the wavy set mark, the operator changes the orientation of the camera device 18 such that the weaving-resuming weft thread Ys aligns with the positioning mark 33 and such that the colored portion M of the weaving-resuming weft thread Ys is excluded from the photographing area E because the photographing area E including the colored portion M of the weaving-resuming weft thread Ys may affect image analysis.

In changing the orientation of the camera device 18, the operator checks the position of the bubble V in the level gauge 40. As shown in FIG. 4A, when the bubble V in the level gauge 40 is placed in a predetermined range, the camera device 18 is oriented horizontally to the direction of the weft Y. As shown in FIG. 4B, when the camera device 18 is not oriented horizontally to the direction of the weft Y, the bubble V in the level gauge 40 is placed out of the predetermined range. In changing the orientation of the camera device 18, the camera device 18 maintains its stable orientation because the camera device 18 is connected to the top rail 14 via the string 35. Therefore, the camera device 18 does not slide over the woven fabric W by its own weight, and does not topple over on the woven fabric W.

By placing the camera device 18 on the woven fabric W so as to align the weaving-resuming weft thread Ys with the positioning mark 32 or 33, the photographing area E securely includes an area where the stop mark is not formed in the woven fabric W and an area where the stop mark may possibly be formed in the woven fabric W. The area where the stop mark is not formed in the woven fabric W is an area woven before the weaving-resuming weft thread Ys is inserted, and the area where the stop mark may possibly be formed in the woven fabric W is an area woven after the weaving-resuming weft thread Ys is inserted.

When positioning the weaving-resuming weft thread Ys with the positioning mark 32 or 33 is completed, the operator determines that it is a state ready for appropriately photographing the woven fabric W by using the camera main body 19, and thus the operator photographs the woven fabric W by using the camera main body 19. The photographed image is transferred to the image analyzing device 21. The image analyzing device 21 performs the image analysis of the photographed image so as to determine the presence or the absence of the stop mark.

In order to inspect for the presence or the absence of the heavy-filling bar or the light-filling bar of the stop mark, the photographed image is used to calculate the normal pitch between threads of the weft Y in an area woven before the weft insertion of the weaving-resuming weft thread Ys, and then an average pitch between threads of the weft Y in an area including the weaving-resuming weft thread Ys woven after weft insertion of the weaving-resuming weft thread Ys. The presence or the absence of the heavy-filling bar or the light-filling bar is determined by comparing the normal pitch with the average pitch calculated by the image analyzing device 21. Determination as to presence of the wavy set mark of the stop mark is based on the presence of a shade in the photographed image. For example, when the photographed image has a dark-shaded portion, the image analyzing device 21 determines that the wavy set mark exists.

Results of the stop-mark inspection obtained from the image analysis is displayed on the display monitor (not shown) connected to the image analyzing device 21, or displayed on the function panel 16. The operator adjusts the air jet loom 10 at relevant components based on the displayed results of the stop-mark inspection. It is preferable to perform the stop-mark inspection by changing the photographing area E in the woven fabric W in the weaving width direction several times.

The woven-fabric inspection apparatus 17 for the air jet loom 10 according to the present embodiment offer following operational effects.
(1) Because the support frame 20 is connected to the top rail 14 via the string 35, the camera device 18 maintains its stable orientation and the camera main body 19 appropriately photographs the woven fabric W. Connecting the support frame 20 to the top rail 14 via the string 35 prevents the support frame 20 from being slipped over the woven fabric W, in a state where the camera device 18 is placed on the woven fabric W that is slanting in a direction of the warp T. Because the string 35 is used to connect the support frame 20 to the top rail 14, the camera device 18 is easily attached to and detached from the air jet loom 10. Because the string 35 to be used is relatively inexpensive, the fabrication cost of the woven-fabric inspection apparatus 17 for the air jet loom 10 is reduced.
(2) Because the string 35 is engaged to the hooking portion 42 provided on the top rail 14, the support frame 20 is supported by the string 35 to maintain its stable orientation. Engaging the string 35 to and disengaging of the string 35 from the hooking portion 42 are easier than directly winding the string 35 onto the top rail 14, which facilitates attaching and detaching the camera device 18 to and from the air jet loom 10.
(3) Because the length of the string 35 is adjustable with the length adjusting device 37, the camera device 18 connected to the top rail 14 is placed on the woven fabric W at a desirable position in the direction of the warp T with maintaining its stable orientation.
(4) The camera device 18 includes the level gauge 40 that is used to level the camera device 18 in relation to the direction of the weft Y. This facilitates positioning the camera device 18 in the direction of the weft Y when the camera device 18 is placed on the woven fabric W that is slanting in the direction of the warp T.
(5) Because the support frame 20 is connected to the top rail 14 via the string 35, the camera device 18 maintains its stable orientation and the operator is allowed to release his or her hand from the camera device 18. In this status, the operator is allowed to operate the air jet loom 10 at a position away from the camera device 18. Therefore, it is possible to operate the air jet loom 10 by only a single operator.

The embodiment disclosed herein are illustrative and not limited to the embodiment described above in every respect. The scope of the present disclosure is defined by the claims rather than the above description, and is intended to include any modifications equivalent in meaning and scope to the claims.

According to the embodiment described above, the hooking portion corresponding to an engagement portion is attached to the top rail corresponding to a structure body of the loom to engage the string corresponding to the string body to the hooking portion. However, the scope of the present disclosure is not limited to the embodiment described above. For example, the support frame may be supported by winding the string body onto the structure body of the loom, without attaching the engagement portion to the structure body of the loom. As another example, the structure body of the loom may be a frame on the reed extending in the weaving width direction of the woven fabric, besides the top rail.

According to the embodiment described above, the level gauge is provided to the camera device. However, the scope of the present disclosure is not limited to the embodiment described above. The level gauge is not essential to the configuration, that is, the camera device without the level gauge may be allowable. The level gauge, when used, may be of a digital type having a digital display, instead of the bubble type. When the bubble-type level gauge is used, the level gauge in the camera device may be at any position as far as the bubble is movable in parallel with the longitudinal direction of the beam.

According to the embodiment described above, the length adjusting device is provided to the camera device. However, the scope of the present disclosure is not limited to the embodiment described above. The length adjusting device is not essential in the configuration. The camera device may not include the length adjusting device. The length adjusting device, when used, may be any configuration capable of adjusting the length of the stingy body, but not limited to the length adjusting device of the embodiment disclosed herein.

According to the embodiment described above, the woven-fabric inspection apparatus is to inspect for the presence or the absence of the stop mark formed in the woven fabric. However, the scope of the present disclosure is not limited to the embodiment described above. The woven-fabric inspection apparatus may inspect the woven fabric for a purpose other than the stop mark in the woven fabric.

According to the embodiment described above, the carabiner is used as the engagement portion for the hooking portion to engage the string. However, the scope of the present disclosure is not limited to the embodiment described above. A member capable of engaging the string may be used in the hooking portion besides the carabiner, such as a clamp and a magnet.

According to the embodiment described above, the string is used as the string body. However, the scope of the present disclosure is not limited to the embodiment described above. Any string body that is flexible and relatively inexpensive like the string may be used, such as a chain and a wire.

A woven-fabric inspection apparatus (17) for a loom (10) includes a camera device (18) having a camera main body (19) photographing a woven fabric (W), and is configured to inspect the woven fabric (W) through image analysis of a photographed image. The camera device (18) is placeable on a surface of the woven fabric (W) and includes a support frame (20) supporting the camera main body (19), an illumination light (25) adjusting illuminance of a photographing area (E) of the camera main body (19), and a string body (35) detachably connecting the support frame (20) and a structure body (14) of the loom (10). The structure body (14) extends in a weaving width direction of the woven fabric (W).

## Claims

1. A woven-fabric inspection apparatus (17) for a loom (10), comprising:
a camera device (18) including a camera main body (19) photographing a woven fabric (W), the woven-fabric inspection apparatus (17) being configured to inspect the woven fabric (W) through image analysis of a photographed image, **characterized in that**
the camera device (18) is placeable on a surface of the woven fabric (W),
the camera device (18) comprises:
a support frame (20) supporting the camera main body (19);
an illumination light (25) adjusting illuminance of a photographing area (E) of the camera main body (19); and
a string body (35) detachably connecting the support frame (20) and a structure body (14) of the loom (10), the structure body (14) extending in a weaving width direction of the woven fabric (W).

2. The woven-fabric inspection apparatus (17) according to claim 1, **characterized in that**
the structure body (14) of the loom (10) is a top rail (14), and
the top rail (14) comprises an engagement portion (42) engaging the string body (35).

3. The woven-fabric inspection apparatus (17) according to claim 1 or 2, **characterized in that** the camera device (18) comprises a length adjusting device (37) adjusting a length of the string body (35).

4. The woven-fabric inspection apparatus (17) according to any one of claims 1 to 3, **characterized in that** the camera device (18) comprises a level gauge (40).
